# FASCICULE DE BREVET EUROPEEN

(11) **EP 2 469 967 B1**
(45) Date de publication et mention de la délivrance du brevet: **19.07.2017**
(21) Numéro de dépôt: 11195656.1
(22) Date de dépôt: 23.12.2011
(51) Int. Cl.: H04W 88/10, H04M 11/06

(54) **Ensemble de télécommunication multiservice et dispositif d'émission/réception d'ondes radioélectriques d'un tel ensemble**
Mehrzweck-Telekommunikationsanlage, und Funkwellen-Sende-/Empfangsvorrichtung einer solchen Anlage
Multi-service telecommunications assembly and device for transmitting/receiving radio waves of such an assembly

(30) Priorité: 23.12.2010 FR 1061230
(43) Date de publication de la demande: 27.06.2012
(73) Titulaire: Société Française du Radiotéléphone-SFR, 75008 Paris (FR)
(72) Inventeur: Bouffel, Patrick, 78860 SAINT-NOM-LA-BRETECHE (FR); Fattouch, Imad, 75013 PARIS (FR); Stefani, Nicolas, 92190 MEUDON (FR)
(74) Mandataire: Deschamps, Samuel

(56) Documents cités:
- US-A1- 2009 111 518
- US-A1- 2010 297 943
- Siemens: "A580-A585", 30 juin 2010 (2010-06-30), Gigaset Communications GmbH, Bocholt, XP002647820, * pages 7,12 *

## Description

La présente invention concerne un ensemble de télécommunication utilisable notamment pour échanger des données entre le réseau Internet et des équipements électroniques reliés à l'ensemble de télécommunication. Les équipements sont par exemple un ordinateur, un téléviseur, un téléphone... et les données comprennent des données numériques telles que des fichiers alphanumériques, des fichiers audio et vidéo, des images... L'invention concerne également un dispositif d'émission/réception d'ondes radioélectriques d'un tel ensemble.

De tels ensembles comprennent généralement un module de télécommunication multiservice relié au réseau Internet via une liaison numérique (DSL), par exemple de type ADSL ou SDSL, et pourvu d'un émetteur/récepteur conforme à la norme IEEE 802.11 ou norme Wi-Fi. Le module de télécommunication, couramment appelé box, est agencé pour fournir des fonctions notamment de modulateur/démodulateur et de passerelle. L'émetteur/récepteur assure la liaison du module de télécommunication avec des équipements électroniques environnants comme un ordinateur et un module de télévision relié à un téléviseur. Le module de télécommunication comprend en outre une prise téléphonique pour la liaison d'un téléphone au module de télécommunication.

Ce module de télécommunication comprend une unité de traitement des données agencée pour échanger des données sur la liaison numérique DSL en utilisant le protocole Internet et la liaison Wi-Fi en utilisant le protocole ETHERNET.

Il est connu un dispositif d'émission/réception UMTS 3G destiné à être relié par une liaison ETHERNET au module de télécommunication. Le dispositif d'émission/réception constitue ainsi un relais de faible puissance créant au domicile de l'utilisateur une cellule domestique de réseau cellulaire ayant sensiblement la taille du domicile de l'utilisateur. Ainsi, l'utilisateur peut utiliser son téléphone mobile chez lui en disposant d'une qualité de communication optimale, si son interlocuteur se trouve dans des conditions similaires ou sur une ligne fixe, car les données téléphoniques transitent par la liaison ETHERNET jusqu'au module de télécommunication et de là par la liaison numérique DSL jusqu'au réseau Internet et au réseau téléphonique de l'opérateur de téléphonie mobile auprès duquel l'utilisateur a contracté un abonnement.

L'usage de la cellule domestique peut être limité à l'utilisateur au domicile duquel est attaché la cellule domestique (et éventuellement à ses proches déclarés) ou à toute personne qui se trouve dans la cellule domestique et qui ont contracté un abonnement auprès de l'opérateur de téléphonie mobile au réseau duquel appartient la cellule domestique.

L'avantage de ce système est double car l'utilisateur bénéficie pour ses communications passées dans cette cellule domestique d'une disponibilité maximale sans surcharger le réseau cellulaire de l'opérateur de téléphonie mobile puisque les communications quittent la cellule domestique par une liaison filaire.

Ce dispositif a cependant l'inconvénient que les ondes qu'il émet perturbent les ondes émises par le module de télécommunication, et inversement. Ceci impose donc de séparer le dispositif d'émission/réception et le module de télécommunication d'une distance supérieure à 50 centimètres. Un câble de liaison ETHERNET doit toutefois relier le module de télécommunication et le dispositif d'émission/réception, qui doivent tous deux disposer en outre d'une alimentation. Même si l'adjonction d'un dispositif d'émission/réception présente des avantages, il peut être rebutant pour l'utilisateur de devoir ajouter un boîtier supplémentaire dont les câbles disgracieux vont venir s'ajouter à la multitude de câbles raccordés aux autres boîtiers dont il dispose déjà.

On aurait pu imaginer d'intégrer un tel dispositif d'émission/réception dans un module de télécommunication. Ceci obligerait toutefois pour le fabricant à produire un module de télécommunication avec dispositif d'émission/réception intégré, un module de télécommunication sans dispositif d'émission/réception intégré pour ses clients non intéressés par cette option et un dispositif d'émission/réception séparé pour ses clients disposant d'un module de télécommunication sans dispositif d'émission/réception intégré et décidant ultérieurement de bénéficier de cette fonctionnalité. Cette multiplication des équipements limitent la possibilité, pour le fabricant, de réaliser des économies d'échelle et complique les opérations de maintenance, de logistique, et de formation des personnels du fabricant.

On connaît dans l'état de la technique la demande de brevet américain N° US 2010/297943, qui se rapporte à un procédé de transmission de données d'un dispositif numérique à un ordinateur.

On connaît également dans l'état de la technique la demande de brevet américain N° US 2009/111518, qui concerne une interface pour des communications cellulaires et non-cellulaires locales.

On connaît également dans l'état de la technique le document Siemens « A580 - A585 » du 30 juin 2010, Gigaset Communications GmbH, Bocholt, XP002647820.

Un but de l'invention est de remédier à tout ou partie des inconvénients mentionnés ci-dessus.

A cet effet, on prévoit, selon l'invention, un ensemble de télécommunication comportant un dispositif d'émission/réception d'ondes radioélectriques dans une première bande de fréquences, un module de télécommunication incorporant un organe d'émission/réception d'ondes radioélectriques dans une deuxième bande de fréquences et un organe de raccordement à un réseau de télécommunication, et un support d'accueil du dispositif d'émission/réception. Le dispositif d'émission/réception comporte un boîtier renfermant une unité électronique de traitement de données reliée à une antenne et à un connecteur externe principal de transfert de données et d'entrée d'un courant d'alimentation de l'unité de traitement. Le dispositif d'émission/réception est en outre agencé pour pouvoir s'engager alternativement sur le support et un boîtier du module de télécommunication, le dispositif d'émission/réception et le module de télécommunication étant agencés de telle manière que, lorsque le dispositif d'émission/réception est engagé sur le boîtier du module de télécommunication :
- le dispositif d'émission/réception et le module de télécommunication soient électromagnétiquement compatibles,
- le dispositif d'émission/réception soit alimenté par le module de télécommunication via le connecteur principal,
- des données soient échangées entre le dispositif d'émission/réception et le module de télécommunication via le connecteur principal.

La première bande de fréquences est par exemple la bande de fréquences utilisées pour la téléphonie UMTS 3G et la deuxième bande de fréquences est par exemple la bande de fréquences utilisées pour les communications Wi-Fi. Ainsi, on comprend que le même dispositif d'émission/réception peut être soit monté sur le module de télécommunication soit monté sur le support. Ceci permet au fabricant d'offrir, à partir d'un dispositif d'émission/réception unique, un dispositif d'émission/réception seul raccordable à un module de télécommunication quelconque ou un module de télécommunication équipé du dispositif d'émission/réception. L'utilisation d'un même connecteur pour le transfert des données et l'alimentation permet de simplifier le circuit électronique tant du dispositif d'émission/réception que du module de télécommunication.

En outre, ceci simplifie les branchements pour l'utilisateur.

De préférence, le connecteur est conforme à la norme USB 2.

La connectique conforme à cette norme est parfaitement adaptée au transport simultané d'énergie et de données.

Avantageusement, le connecteur a des conducteurs dimensionnés pour permettre l'entrée d'une puissance d'environ 5 W.

Cette puissance est un bon compromis entre les besoins du dispositif d'émission/réception et le surcoût engendré par l'adaptation du connecteur au transport de puissance.

De préférence, l'unité de traitement du dispositif d'émission/réception est agencée pour transmettre et recevoir les données à l'antenne selon un protocole de type ETHERNET et comporte un circuit intégré agencé pour recevoir des données au protocole USB2 en entrée et fournir en sortie les données au protocole ETHERNET, et inversement.

L'utilisation d'un circuit dédié, par exemple de type ASIC, est un gage de fiabilité tout en conservant un prix relativement faible.

Avantageusement, le support est agencé pour alimenter le dispositif d'émission/réception, lorsque ce dernier est monté sur le support, via le connecteur externe du dispositif d'émission/réception.

Il est de la sorte uniquement nécessaire de brancher le cordon d'alimentation du support sur le réseau électrique et de monter le dispositif d'émission/réception sur le support pour que le dispositif d'émission/réception fonctionne. Il n'y donc pas de connexion de l'alimentation sur le support lui-même, ce qui est plus simple pour l'utilisateur et ne laisse en outre pas de connecteur apparent inoccupé lorsque le dispositif d'émission/réception est monté sur un module de télécommunication.

De préférence, le dispositif d'émission/réception comprend des moyens de refroidissement et, avantageusement, les moyens de refroidissement comportent des ouvertures ménagés dans le boîtier pour créer un circuit d'air convectif dans le boîtier, et au moins une surface d'échange thermique disposée dans le circuit d'air convectif.

Le refroidissement est obtenu par des moyens passifs mettant en oeuvre une convection naturelle. La consommation en énergie des moyens de refroidissement est donc nulle.

L'invention a également pour objet un dispositif d'émission/réception d'ondes radioélectriques d'un ensemble du type ci-dessus.

D'autres caractéristiques et avantages de l'invention ressortiront à la lecture de la description qui suit de modes de réalisation particuliers non limitatifs de l'invention.

Il sera fait référence aux dessins annexés, parmi lesquels :

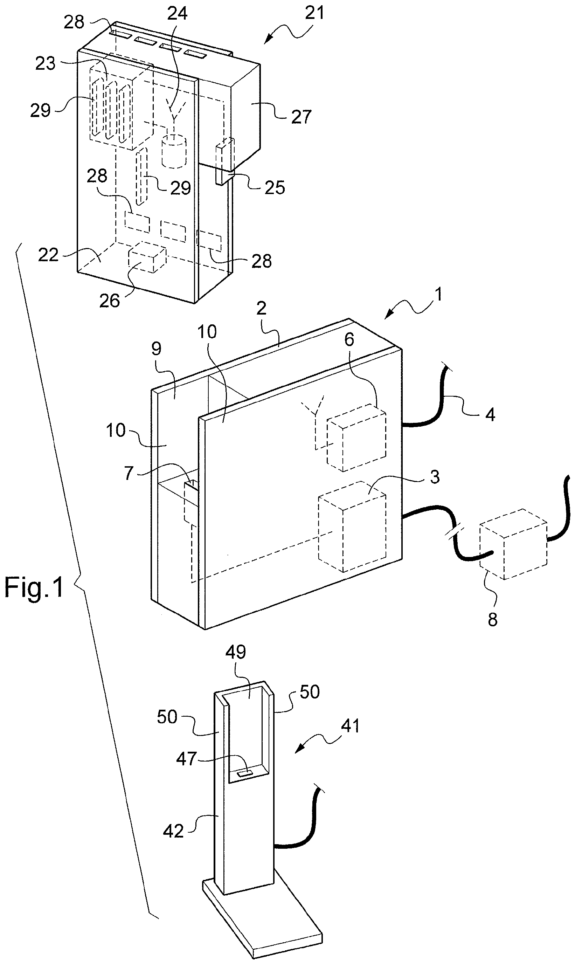

- la figure 1 est une vue générale d'un ensemble de télécommunication conforme à l'invention,
- la figure 2 est une vue schématique d'un module de télécommunication sur lequel est monté à un dispositif d'émission/réception (en cours de mise en place),
- la figure 3 est une vue schématique d'un dispositif d'émission/réception monté sur un support (en cours de mise en place) et relié à un module de télécommunication séparé.

En référence aux figures, l'invention concerne un ensemble de télécommunication destiné à permettre notamment à un utilisateur de :
- accéder au réseau Internet,
- téléphoner en utilisant une ligne filaire,
- téléphoner en utilisant un téléphone mobile apte aux communications de téléphonie cellulaire conforme à la norme UMTS,
- recevoir des programmes de télévision,
- raccorder plusieurs ordinateurs ou autres équipement informatiques les uns aux autres.

L'ensemble de télécommunication comporte un module de télécommunication, généralement désigné en 1, comporte un boîtier 2 contenant une unité de commande 3 relié à un organe de raccordement 4 à un réseau de télécommunication 5, à un organe d'émission/réception 6 d'ondes radioélectriques dans la bande de fréquences des communications conformes à la norme IEEE 802.11 (Wi-Fi) et à un connecteur USB 7. L'organe de raccordement 4 est ici une liaison numérique de type ADSL comportant un connecteur apte à être relié à une prise d'un réseau de téléphonie fixe lui-même relié au réseau Internet. Le connecteur USB 7 est conforme à la norme USB 2.0 et est agencé pour assurer un transfert de données et une sortie d'un courant d'alimentation. Le connecteur USB 7 a des conducteurs dimensionnés pour permettre la transmission d'une puissance d'environ 5 W. Une unité d'alimentation 8 est en outre reliée via un cordon d'alimentation à l'unité de commande 3 pour alimenter celle-ci. L'unité d'alimentation 8 comprend de façon connue en elle-même un câble pourvu d'une prise de raccordement au réseau de distribution électrique et un transformateur ou tout autre organe de transformation ou conversion électrique agencé pour transformer le courant disponible sur le réseau de distribution électrique en un courant utilisable par l'unité de commande 3.

L'unité de commande 3 comprend de façon connue en elle-même des mémoires et un processeur programmé notamment pour :
- échanger des données avec le réseau de télécommunication en utilisant le protocole Internet (fonction passerelle),
- échanger des données via l'organe d'émission/réception 6 avec des équipements environnants tels qu'un ordinateur et un module de télévision non représentés (fonction routeur),
- assurer un service de téléphonie via le réseau de télécommunication.

Le boîtier 2 a sensiblement une forme de quadrilatère possédant un décrochement 9 qui est ménagé dans son épaisseur et de part et d'autre duquel s'étendent deux ailes 10 du boîtier 1. Sur un côté inférieur du décrochement 9 débouche le connecteur USB 7.

L'ensemble de télécommunication comprend un dispositif d'émission/réception 21 d'ondes radioélectriques dans une bande de fréquences correspondant à celles utilisée dans les réseaux cellulaires de type UMTS de troisième génération (3G voire 3G+).

Le dispositif d'émission/réception 21 comporte un boîtier 22 renfermant une unité électronique de traitement 23 de données reliée à une antenne 24 et à un connecteur externe principal 25. Le connecteur externe principal 25 est conforme à la norme USB 2.0 et est agencé pour assurer un transfert de données et une entrée d'un courant d'alimentation de l'unité de traitement 23. Le connecteur externe principal 25 a des conducteurs dimensionnés pour permettre l'entrée d'une puissance d'environ 5 W.

L'unité de traitement 23 du dispositif d'émission/réception 21 est agencée pour transmettre des données via l'antenne 24 conformément à la norme UMTS 3G et comporte un circuit intégré agencé pour recevoir des données au protocole USB 2.0 en entrée et fournir en sortie les données au protocole ETHERNET, et inversement. Le circuit intégré est ici un circuit intégré de type ASIC comportant un contrôleur ETHERNET et une interface USB. Ce circuit intégré est agencé pour faire passer des données du protocole ETHERNET au protocole USB et inversement. Le dispositif d'émission/réception comporte un connecteur externe additionnel 26 (type RJ45 ou autre) dédié au transfert de données et relié à l'unité de traitement 23. L'unité de traitement 23, et plus généralement tous les composants du dispositif d'émission/réception 21 sont choisis pour avoir un bon rendement, de manière que le dispositif d'émission/réception consomme une puissance maximale de 5W.

Le boîtier 22 a sensiblement une forme de quadrilatère en saillie d'un côté duquel s'étend une excroissance 27 sur une face inférieure de laquelle débouche le connecteur principal externe 25 tandis que le connecteur externe additionnel débouche ici sur une face latérale du boîtier 22. L'excroissance 27 est aux dimensions du décrochement 9 afin de pouvoir y être logé en étant reçu entre les ailes 10, le connecteur principal externe 25 étant alors raccordé au connecteur USB 7.

Le dispositif d'émission/réception 21 comprend des moyens de refroidissement qui comportent des ouvertures 28 ménagés dans le boîtier pour créer un circuit d'air convectif dans le boîtier 22 et des surfaces d'échange thermique, symbolisées en 29, disposées dans le circuit d'air convectif. L'unité de traitement 23, et plus généralement tous les composants du dispositif d'émission/réception 21 sont choisis pour être faiblement émetteurs de chaleur de sorte que ce refroidissement passif soit suffisant pour maintenir lesdits composants dans leur plage de température de fonctionnement.

L'ensemble de télécommunication comprend en outre un support d'accueil du dispositif d'émission / réception 21. Le support d'accueil, généralement désigné en 41, comprend un socle 42 délimitant un renfoncement 49 de part et d'autre duquel s'étendent deux ailes 50. Dans le renfoncement 49, sur un côté inférieur de celui-ci, débouche un connecteur USB 47 conforme à la norme USB 2.0 et agencé pour assurer ici uniquement une sortie d'un courant d'alimentation. Le connecteur USB 47 a des conducteurs dimensionnés pour permettre le transfert d'une puissance d'environ 5 W et est relié à une unité d'alimentation 48 via un cordon d'alimentation. L'unité d'alimentation 48 comprend de façon connue en elle-même un câble pourvu d'une prise de raccordement au réseau de distribution électrique et un transformateur ou tout autre organe de transformation ou conversion électrique agencé pour transformer le courant disponible sur le réseau de distribution électrique en un courant utilisable par le dispositif d'émission/réception 21 comme cela sera détaillé après.

Le renfoncement 49 a une géométrie et des dimensions identiques à celles du renfoncement 9 de telle manière que l'excroissance 27 puisse y être logé en étant reçu entre les ailes 50, le connecteur principal externe 25 étant alors connecté au connecteur USB 47.

Le dispositif d'émission/réception 21 est ainsi agencé pour pouvoir s'engager alternativement sur le support 41 et le module de télécommunication 1.

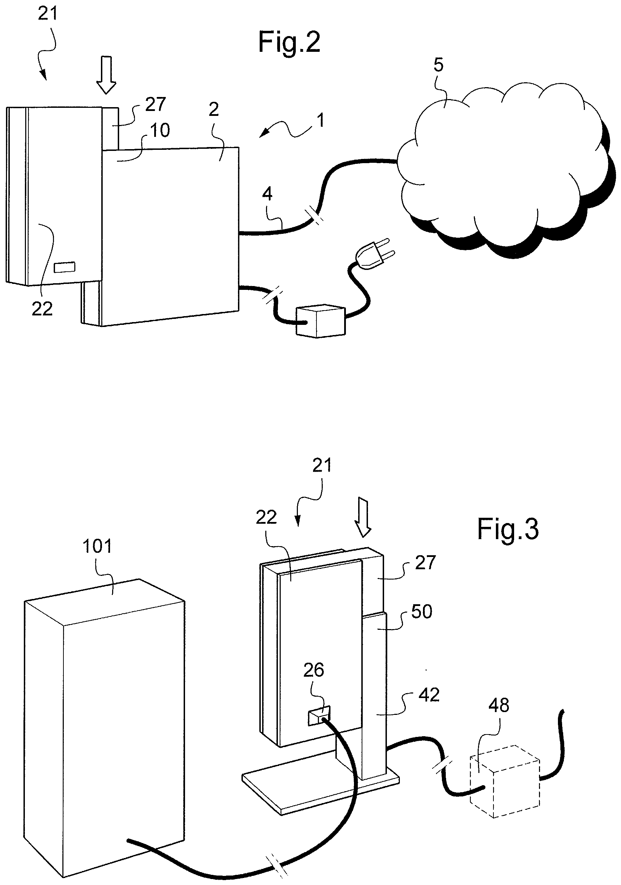

Dans le premier cas (figure 3), le support 41 est agencé pour alimenter le dispositif d'émission/réception 21, lorsque ce dernier est monté sur le support 41, via le connecteur USB 47 et le connecteur externe principal 25. Un câble de liaison ETHERNET est alors relié au connecteur externe additionnel 26 et à un module de télécommunication séparé 101 relié au réseau de télécommunication.

On notera que le maintien du dispositif d'émission/réception sur le support d'accueil 41 est assuré par la connexion des connecteurs 47 et 25 l'un à l'autre, la face inférieure de l'excroissance 27 reposant sur le côté inférieur du décrochement 49.

Dans le deuxième cas (figure 2), le dispositif d'émission/réception 21 et le module de télécommunication 1 sont agencés de telle manière que, lorsque le dispositif d'émission/réception 21 est engagé sur le boîtier 2 du module de télécommunication 1 :
- le dispositif d'émission/réception 21 et le module de télécommunication 1 soient électromagnétiquement compatibles,
- le dispositif d'émission/réception 21 soit alimenté par le module de télécommunication 1 via le connecteur USB7 et le connecteur externe principal 25,
- des données soient échangées entre le dispositif d'émission/réception 21 et le module de télécommunication 1 via le connecteur USB 7 et le connecteur externe principal 25.

Le module de télécommunication 1 et le dispositif d'émission/réception 21 comportent ainsi des moyens pour limiter des interactions électromagnétiques entre eux. Le module de télécommunication 1 et le dispositif d'émission/réception 21 ont à cette fin des circuits comportant des pistes conductrices de longueurs telles que le circuit du module de télécommunication 1 et le circuit du dispositif d'émission/réception 21 ne sont pas accordés sur une même fréquence. Le module de télécommunication 1 et le dispositif d'émission/réception 21 comprennent en outre chacun un filtre en réception pour rejeter les signaux dans une bande de fréquence autre que la bande de fréquences du module de télécommunication 1 et du dispositif d'émission/réception 21 respectivement.

On notera que les moyens de refroidissement sont passifs et fonctionnent aussi bien que le dispositif d'émission/réception soit monté sur le support ou sur le module de télécommunication.

Dans une version avantageuse du dispositif d'émission/réception, le dispositif d'émission/réception est agencé pour pouvoir être utilisé pour pallier une défaillance de la liaison au réseau de télécommunication. Dans ce cas, les données reçues par le module de télécommunication pour être transmises au réseau de télécommunication ne sont plus envoyées directement à ce dernier mais sont envoyées au dispositif d'émission/réception pour être transmises par ce dernier au réseau cellulaire. Ceci suppose que le dispositif d'émission/réception soit agencé pour constituer un modem et ait une puissance suffisante pour échanger des données avec le réseau cellulaire.

Bien entendu, l'invention n'est pas limitée aux modes de réalisation décrits mais englobe toute variante entrant dans le champ de l'invention telle que définie par les revendications.

En particulier, l'invention s'applique à tout système de télécommunication par onde radio, en téléphonie cellulaire ou non. Les fréquences et bandes de fréquences utilisées peuvent être différentes de celles mentionnées ci-dessus.

Le module de télécommunication 1 et le dispositif d'émission/réception 21 peuvent comporter des blindages contre le rayonnement électromagnétique afin d'améliorer leur compatibilité électromagnétique réciproque.

En outre, bien que connecteur principal externe ait été décrit comme répondant à la norme USB 2.0, ce connecteur et ceux destinés à se connecter à celui-ci peuvent être conformes à une autre norme ou bien être de type propriétaire.

Les moyens de refroidissement peuvent être des moyens de refroidissement actifs, comme un ventilateur, mais ceci pénalise la consommation du dispositif d'émission/réception.

Il est possible de prévoir des moyens mécaniques de maintien du dispositif d'émission/réception sur le module de télécommunication et/ou sur le support, et par exemple un clipsage, un verrou mobile, un vissage ou autre.

La structure du support et du module de télécommunication peut être différente de celle décrite. Le bloc d'alimentation peut par exemple être intégré au support et/ou au module de télécommunication, ou bien encore à la prise de raccordement du support et/ou du module de télécommunication au réseau électrique.

On notera qu'il est possible de commercialiser le dispositif d'émission/réception soit avec le support, soit avec le module de télécommunication, soit seul.

Il est en outre envisageable de prévoir une prise de raccordement ETHERNET, par exemple de type RJ45, directement sur le support pour permettre le raccordement du support à un module de télécommunication séparé. Ainsi, la puissance (provenant du bloc d'alimentation 48) et les données (provenant du module de télécommunication) transitent par le connecteur 47 et le connecteur principal externe 25.

D'autres types de protocole de communication, filaire ou sans fil, que ceux mentionnés dans le mode de réalisation décrit sont utilisables.

## Revendications

1. Ensemble de télécommunication comportant un dispositif relais d'émission/réception (21) d'ondes radioélectriques dans une première bande de fréquences, un module de télécommunication (1) incorporant un organe d'émission/réception (6) d'ondes radioélectriques dans une deuxième bande de fréquences et un organe de raccordement (4) à un réseau de télécommunication, et un support d'accueil (41) du dispositif relais d'émission/réception (21), le dispositif relais d'émission/réception (21) comportant un boîtier (22) renfermant une unité électronique de traitement (23) de données reliée à une antenne (24) et à un connecteur externe principal (25) de transfert de données et d'entrée d'un courant d'alimentation de l'unité de traitement (23), le dispositif relais d'émission/réception (21) étant en outre agencé pour pouvoir s'engager alternativement sur le support (41) et un boîtier (2) du module de télécommunication (1), le dispositif relais d'émission/réception (21) et le module de télécommunication (1) étant agencés de telle manière que, lorsque le dispositif relais d'émission/réception est engagé sur le boîtier (2) du module de télécommunication (1) :
- le dispositif relais d'émission/réception (21) et le module de télécommunication (1) soient électromagnétiquement compatibles,
- le dispositif relais d'émission/réception (21) soit alimenté par le module de télécommunication (1) via le connecteur principal (25),
- des données soient échangées entre le dispositif relais d'émission/réception (21) et le module de télécommunication (1) via le connecteur principal (25).

2. Ensemble selon la revendication 1, dans lequel le connecteur (25) est conforme à la norme USB 2.

3. Ensemble selon la revendication 2, dans lequel le connecteur (25) a des conducteurs dimensionnés pour permettre l'entrée d'une puissance d'environ 5 W.

4. Ensemble selon la revendication 2, dans lequel l'unité de traitement (23) du dispositif relais d'émission/réception (21) est agencée pour transmettre et recevoir les données à l'antenne (24) selon un protocole de type ETHERNET et comporte un circuit intégré agencé pour recevoir des données au protocole USB2 en entrée et fournir en sortie les données au protocole ETHERNET, et inversement.

5. Ensemble selon la revendication 1, dans lequel le support (41) est agencé pour alimenter le dispositif relais d'émission/réception (21), lorsque ce dernier est monté sur le support (41), via le connecteur externe (25) du dispositif relais d'émission/réception (21).

6. Ensemble selon la revendication 1, dans lequel le dispositif relais d'émission/réception (21) comporte un connecteur externe additionnel (26) dédié au transfert de données et relié à l'unité de traitement (23).

7. Ensemble selon la revendication 1, dans lequel le dispositif relais d'émission/réception (21) comprend des moyens de refroidissement.

8. Ensemble selon la revendication 7, dans lequel les moyens de refroidissement comportent des ouvertures (28) ménagées dans le boîtier (22) pour créer un circuit d'air convectif dans le boîtier (22) et au moins une surface d'échange thermique (29) disposées dans le circuit d'air convectif.

9. Ensemble selon la revendication 1, dans lequel le module de télécommunication (1) et le dispositif relais d'émission/réception (21) comportent des moyens pour limiter des interactions électromagnétiques entre eux.

10. Ensemble selon la revendication 9, dans lequel le module de télécommunication (1) et le dispositif relais d'émission/réception (21) ont des circuits comportant des pistes conductrices de longueurs telles que le circuit du module de télécommunication et le circuit du dispositif relais d'émission/réception ne sont pas accordés sur une même fréquence.

11. Ensemble selon la revendication 9, dans lequel le module de télécommunication (1) et le dispositif relais d'émission/réception (21) comprennent chacun un filtre en réception pour rejeter les signaux dans une bande de fréquence autre que la bande de fréquences du module de télécommunication (1) et du dispositif relais d'émission/réception (21) respectivement.

12. Dispositif relais d'émission/réception (21) d'ondes radioélectriques comportant un boîtier (22) renfermant une unité électronique de traitement (23) de données reliée à une antenne (24) et à un connecteur externe principal (25) de transfert de données et d'entrée d'un courant d'alimentation de l'unité de traitement (23), ledit dispositif relais d'émission/réception (21) étant en outre agencé pour pouvoir s'engager alternativement sur un support (41) et un boîtier (2) d'un module de télécommunication (1), ledit dispositif relais d'émission/réception (21) étant agencé de telle manière que, lorsque le dispositif relais d'émission/réception (21) est engagé sur le boîtier (2) d'un module de télécommunication (1) :
- le dispositif relais d'émission/réception (21) et le module de télécommunication (1) soient électromagnétiquement compatibles,
- le dispositif relais d'émission/réception (21) soit alimenté par le module de télécommunication (1) via le connecteur principal (25),
- des données soient échangées entre le dispositif relais d'émission/réception (21) et le module de télécommunication (1) via le connecteur principal (25).

## Patentansprüche

1. Telekommunikationseinheit, die eine Sende-/Empfangs-Relaisvorrichtung (21) von Funkwellen in einem ersten Frequenzband, ein Telekommunikationsmodul (1), das ein Sende-/Empfangsorgan (6) von Funkwellen in einem zweiten Frequenzband und ein Anschlussorgan (4) an ein Telekommunikationsnetz aufnimmt, und einen Aufnahmeträger (41) der Sende-/Empfangs-Relaisvorrichtung (21) aufweist, wobei die Sende-/Empfangs-Relaisvorrichtung (21) ein Gehäuse (22) aufweist, das eine elektronische Datenverarbeitungseinheit (23) einschließt, die mit einer Antenne (24) und mit einem externen Hauptverbinder (25) zur Datenübertragung und für den Eingang eines Versorgungsstroms der Verarbeitungseinheit (23) verbunden ist, wobei die Sende-/Empfangs-Relaisvorrichtung (21) außerdem eingerichtet ist, um alternativ auf den Träger (41) und ein Gehäuse (2) des Telekommunikationsmoduls (1) eingesetzt zu werden, wobei die Sende-/Empfangs-Relaisvorrichtung (21) und das Telekommunikationsmodul (1) so eingerichtet sind, dass, wenn die Sende-/Empfangs-Relaisvorrichtung auf das Gehäuse (2) des Telekommunikationsmoduls (1) eingesetzt ist:
- die Sende-/Empfangs-Relaisvorrichtung (21) und das Telekommunikationsmodul (1) elektromagnetisch kompatibel sind,
- die Sende-/Empfangs-Relaisvorrichtung (21) über den Hauptverbinder (25) vom Telekommunikationsmodul (1) versorgt wird,
- Daten zwischen der Sende-/Empfangs-Relaisvorrichtung (21) und dem Telekommunikationsmodul (1) über den Hauptverbinder (25) ausgetauscht werden.

2. Einheit nach Anspruch 1, wobei der Verbinder (25) der Norm USB 2 entspricht.

3. Einheit nach Anspruch 2, wobei der Verbinder (25) Leiter hat, die bemessen sind, um den Eingang einer Leistung von etwa 5W zu erlauben.

4. Einheit nach Anspruch 2, wobei die Verarbeitungseinheit (23) der Sende-/Empfangs-Relaisvorrichtung (21) eingerichtet ist, um die Daten gemäß einem Protokoll der Art ETHERNET an die Antenne (24) zu übertragen und von ihr zu empfangen, und einen integrierten Schaltkreis aufweist, der eingerichtet ist, um Daten im Protokoll USB 2 am Eingang zu empfangen und an Ausgang die Daten im ETHERNET-Protokoll zu senden und umgekehrt.

5. Einheit nach Anspruch 1, wobei der Träger (41) eingerichtet ist, um die Sende-/Empfangs-Relaisvorrichtung (21), wenn letztere auf den Träger (41) montiert ist, über den externen Verbinder (25) der Sende-/Empfangs-Relaisvorrichtung (21) zu versorgen.

6. Einheit nach Anspruch 1, wobei die Sende-/Empfangs-Relaisvorrichtung (21) einen zusätzlichen externen Verbinder (26) aufweist, der für die Datenübertragung dediziert und mit der Verarbeitungseinheit (23) verbunden ist.

7. Einheit nach Anspruch 1, wobei die Sende-/Empfangs-Relaisvorrichtung (21) Kühleinrichtungen enthält.

8. Einheit nach Anspruch 7, wobei die Kühleinrichtungen Öffnungen (28), die im Gehäuse (22) ausgespart sind, um einen konvektiven Luftkreislauf im Gehäuse (22) zu erzeugen, und mindestens eine Wärmetauscherfläche (29) aufweisen, die im konvektiven Luftkreislauf angeordnet sind.

9. Einheit nach Anspruch 1, wobei das Telekommunikationsmodul (1) und die Sende-/Empfangs-Relaisvorrichtung (21) Einrichtungen aufweisen, um elektromagnetische Wechselwirkungen zwischen ihnen zu begrenzen.

10. Einheit nach Anspruch 9, wobei das Telekommunikationsmodul (1) und die Sende-/Empfangs-Relaisvorrichtung (21) Schaltkreise haben, die Leiterbahnen solcher Längen aufweisen, dass der Schaltkreis des Telekommunikationsmoduls und der Schaltkreis der Sende-/Empfangs-Relaisvorrichtung nicht auf die gleiche Frequenz abgestimmt sind.

11. Einheit nach Anspruch 9, wobei das Telekommunikationsmodul (1) und die Sende-/Empfangs-Relaisvorrichtung (21) je einen Filter am Empfang enthalten, um die Signale in einem anderen Frequenzband als dem Frequenzband des Telekommunikationsmoduls (1) bzw. der Sende-/Empfangs-Relaisvorrichtung (21) zurückzuweisen.

12. Sende-/Empfangs-Relaisvorrichtung (21) von Funkwellen, die ein Gehäuse (22) aufweist, das eine elektronische Datenverarbeitungseinheit (23) einschließt, die mit einer Antenne (24) und mit einem externen Hauptverbinder (25) zur Übertragung von Daten und für den Eingang eines Versorgungsstroms der Verarbeitungseinheit (23) verbunden ist, wobei die Sende-/Empfangs-Relaisvorrichtung (21) außerdem eingerichtet ist, um alternativ auf einen Träger (41) und ein Gehäuse (2) eines Telekommunikationsmoduls (1) eingesetzt zu werden, wobei die Sende-/Empfangs-Relaisvorrichtung (21) so eingerichtet ist, dass, wenn die Sende-/Empfangs-Relaisvorrichtung (21) auf das Gehäuse (2) eines Telekommunikationsmoduls (1) eingesetzt ist:
- die Sende-/Empfangs-Relaisvorrichtung (21) und das Telekommunikationsmodul (1) elektromagnetisch kompatibel sind,
- die Sende-/Empfangs-Relaisvorrichtung (21) über den Hauptverbinder (25) vom Telekommunikationsmodul (1) versorgt wird,
- Daten zwischen der Sende-/Empfangs-Relaisvorrichtung (21) und dem Telekommunikationsmodul (1) über den Hauptverbinder (25) ausgetauscht werden.

## Claims

1. Telecommunication assembly comprising a relay device (21) for transmitting/receiving radio waves in a first frequency band, a telecommunication module (1) incorporating a member (6) for transmitting/receiving radio waves in a second frequency band and a member (4) for connecting to a telecommunication network, and a docking support (41) for the transmitting/receiving relay device (21), the transmitting/receiving relay device (21) comprising a housing (22) enclosing an electronic data processing unit (23) linked to an antenna (24) and to a main external data transfer and power supply current input connector (25) of the processing unit (23), the transmitting/receiving relay device (21) being also arranged to be able to be fitted alternatively on the support (41) and a housing (2) of the telecommunication module (1), the transmitting/receiving relay device (21) and the telecommunication module (1) being arranged so that, when the transmitting/receiving relay device is fitted on the housing (2) of the telecommunication module (1):
- the transmitting/receiving relay device (21) and the telecommunication module (1) are electromagnetically compatible,
- the transmitting/receiving relay device (21) is powered by the telecommunication module (1) via the main connector (25),
- data are exchanged between the transmitting/receiving relay device (21) and the telecommunication module (1) via the main connector (25).

2. Assembly according to Claim 1, in which the connector (25) conforms to the USB 2 standard.

3. Assembly according to Claim 2, in which the connector (25) has conductors dimensioned to allow the input of a power of approximately 5 W.

4. Assembly according to Claim 2, in which the processing unit (23) of the transmitting/receiving relay device (21) is arranged to transmit and receive the data from the antenna (24) according to a protocol of ETHERNET type and comprises an integrated circuit arranged to receive USB2 protocol data as input and supply ETHERNET protocol data as output, and vice versa.

5. Assembly according to Claim 1, in which the support (41) is arranged to power the transmitting/receiving relay device (21), when the latter is mounted on the support (41), via the external connector (25) of the transmitting/receiving relay device (21).

6. Assembly according to Claim 1, in which the transmitting/receiving relay device (21) comprises an additional external connector (26) dedicated to the transfer of data and linked to the processing unit (23).

7. Assembly according to Claim 1, in which the transmitting/receiving relay device (21) comprises cooling means.

8. Assembly according to Claim 7, in which the cooling means comprise openings (28) formed in the housing (22) to create a convective air circuit in the housing (22) and at least one heat exchange surface (29) arranged in the convective air circuit.

9. Assembly according to Claim 1, in which the telecommunication module (1) and the transmitting/receiving relay device (21) comprise means for limiting electromagnetic interactions between them.

10. Assembly according to Claim 9, in which the telecommunication module (1) and the transmitting/receiving relay device (21) have circuits comprising conductive tracks of lengths such that the circuit of the telecommunication module and the circuit of the transmitting/receiving relay device are not tuned to a same frequency.

11. Assembly according to Claim 9, in which the telecommunication module (1) and the transmitting/receiving relay device (21) each comprise a reception filter for rejecting the signals in a frequency band other than the frequency band of the telecommunication module (1) and of the transmitting/receiving relay device (21) respectively.

12. Radio wave transmitting/receiving relay device (21) comprising a housing (22) enclosing an electronic data processing unit (23) linked to an antenna (24) and to a main external data transfer and power supply current input connector (25) of the processing unit (23), said transmitting/receiving relay device (21) being also arranged to be able to be fitted alternatively on a support (41) and a housing (2) of a telecommunication module (1), said transmitting/receiving relay device (21) being arranged so that, when the transmitting/receiving relay device (21) is fitted on the housing (2) of a telecommunication module (1):
- the transmitting/receiving relay device (21) and the telecommunication module (1) are electromagnetically compatible,
- the transmitting/receiving relay device (21) is powered by the telecommunication module (1) via the main connector (25),
- data are exchanged between the transmitting/receiving relay device (21) and the telecommunication module (1) via the main connector (25).
